(19) Europäisches Patentamt
European Patent Office
Office européen des brevets

(11) EP 3 131 851 B1

(12) **FASCICULE DE BREVET EUROPEEN**

(45) Date de publication et mention de la délivrance du brevet:
**20.06.2018 Bulletin 2018/25**

(21) Numéro de dépôt: **15725730.4**

(22) Date de dépôt: **13.04.2015**

(51) Int Cl.:
***C01B 33/22*** *(2006.01)* ***C01B 33/38*** *(2006.01)*
***C01B 33/40*** *(2006.01)* ***C01B 33/42*** *(2006.01)*

(86) Numéro de dépôt international:
**PCT/FR2015/050982**

(87) Numéro de publication internationale:
**WO 2015/159005 (22.10.2015 Gazette 2015/42)**

(54) **COMPOSITION COMPRENANT DES PARTICULES PHYLLOMINÉRALES ET PROCÉDÉ DE PRÉPARATION**

ZUSAMMENSETZUNG MIT PHYLLOMINERALPARTIKELN UND VERFAHREN ZUR HERSTELLUNG DAVON

COMPOSITION COMPRISING PHYLLOMINERAL PARTICLES AND METHOD FOR THE PRODUCTION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2014 FR 1453330**

(43) Date de publication de la demande:
**22.02.2017 Bulletin 2017/08**

(73) Titulaires:
- **Centre National de la Recherche Scientifique (C.N.R.S.)**
  **75794 Paris Cedex 16 (FR)**
- **Université Paul Sabatier Toulouse III**
  **31400 Toulouse (FR)**

(72) Inventeurs:
- **MARTIN, François**
  **31570 Sainte Foy d'Aigrefeuille (FR)**
- **DUMAS, Angela**
  **31320 Pechabou (FR)**
- **MICOUD, Pierre**
  **31390 Peyssies (FR)**
- **LE ROUX, Christophe**
  **31290 Avignonet Lauragais (FR)**
- **FERRAGE, Eric**
  **31500 Toulouse (FR)**
- **PETIT, Sabine**
  **86210 Bonneuil-Matours (FR)**

(74) Mandataire: **Lavoix**
**2, place d'Estienne d'Orves**
**75441 Paris Cedex 09 (FR)**

(56) Documents cités:
**EP-A1- 0 306 172** **EP-B1- 2 150 506**
**WO-A1-2013/004979** **WO-A1-2013/093339**
**WO-A2-2008/115150** **US-A- 4 952 388**

- **DATABASE CA [Online] CHEMICAL ABSTRACTS SERVICE, COLUMBUS, OHIO, US; 15 décembre 2005 (2005-12-15), YAO, MING ET AL: "Application of FTIR technique in microwave - hydrothermal synthesis of saponite", XP002729376, extrait de STN Database accession no. 143:487671 & YAO, MING ET AL: "Application of FTIR technique in microwave - hydrothermal synthesis of saponite", GUANGPUXUE YU GUANGPU FENXI , 25(6), 870-873 CODEN: GYGFED; ISSN: 1000-0593, 2005,**
- **VICENTE I ET AL: "Fast microwave synthesis of hectorite", APPLIED CLAY SCIENCE, ELSEVIER SCIENCE, NL, vol. 43, no. 1, 1 janvier 2009 (2009-01-01), pages 103-107, XP025800996, ISSN: 0169-1317, DOI: 10.1016/J.CLAY.2008.07.012 [extrait le 2008-07-24]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 131 851 B1

## Description

L'invention concerne une composition comprenant des particules phyllominérales ainsi qu'un procédé de préparation d'une telle composition.

Dans tout le texte, on désigne par « particule phyllominérale », toute particule minérale présentant une structure cristalline comprenant au moins un feuillet élémentaire comprenant au moins une couche, dite couche tétraédrique, formée d'un réseau bidimensionnel d'éléments chimiques assemblés selon une structure cristalline tétraédrique, et au moins une couche, dite couche octaédrique, formée d'un réseau bidimensionnel d'éléments chimiques assemblés selon une structure cristalline octaédrique. Il peut par exemple s'agir de phyllosilicates.

De nombreux minéraux tels que les borates ou les silicates sont utilisés dans divers domaines industriels. Les particules minérales phyllosilicatées, telles que le talc, sont par exemple utilisées sous forme de fines particules dans de nombreux secteurs industriels, tels que : les thermoplastiques, les élastomères, le papier, la peinture, les vernis, le textile, la métallurgie, la pharmaceutique, la cosmétique, les produits phytosanitaires ou encore les engrais dans lesquels des phyllosilicates tel que le talc sont utilisés, par incorporation dans une composition, à titre de charge inerte (pour leur stabilité chimique ou encore pour la dilution de composés actifs de coût supérieur) ou de charges fonctionnelles (par exemple pour renforcer les propriétés mécaniques de certains matériaux).

Le talc naturel, qui est un silicate de magnésium hydroxylé de formule $Si_4Mg_3O_{10}(OH)_2$, appartient à la famille des phyllosilicates (silicates lamellaires). Les phyllosilicates sont constitués par un empilement régulier de feuillets élémentaires de structure cristalline, dont le nombre varie de quelques unités à quelques milliers d'unités. Parmi les phyllosilicates, le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2:1, dont font notamment partie les smectites. Au vu de leur structure, les phyllosilicates 2:1 sont également qualifiées de type T.O.T. (tétraèdre-octaèdre-tétraèdre).

La couche octaédrique des phyllosilicates 2:1 est formée de deux plans d'ions $O^{2-}$ et $OH^-$ (dans la proportion molaire $O^{2-}/OH^-$ de 2/1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires.

En ce qui concerne le talc, pour nombre de ces applications, une pureté élevée, une finesse des particules et de bonnes propriétés cristallines sont recherchées car elles sont déterminantes pour la qualité du produit final.

Or, la préparation d'une composition pulvérulente à partir de blocs de talc naturel, par broyage et traitement du talc ne permet pas de contrôler la pureté, la lamellarité, et la taille des particules de talc obtenues. En outre, le broyage du talc naturel entraîne irrémédiablement une amorphisation de celui-ci, ou à tout le moins une diminution importante de sa cristallinité.

Dans ce contexte, EP 306172 décrit des phyllosilicates délaminés à l'aide d'une vapeur réactive de façon à diminuer leur épaisseur.

D'autre part, WO 2008/009799 et WO 2013/004979 proposent une composition talqueuse comprenant au moins un minéral synthétique silico/germano-métallique de formule $(Si_xGe_{1-x})_4M_3O_{10}(OH)_2$ et son procédé de préparation par traitement hydrothermal d'un hydrogel silico/germano-métallique de formule $(Si_xGe_{1-x})_4\ M_3O_{11}$, $n'H_2O$. Une telle composition talqueuse comprend des particules phyllominérales présentant des similarités structurelles avec des particules phyllominérales naturelles telles que le talc naturel.

Cependant, un procédé de préparation selon WO 2008/009799 ne permet pas de maitriser toutes les caractéristiques structurelles des particules phyllominérales synthétisées.

En outre, la compatibilité avec les contraintes d'une exploitation à l'échelle industrielle, notamment en termes de durée et de coût énergétique, du procédé de préparation de particules phyllominérales selon WO 2008/009799 pourrait être améliorée.

Dans ce contexte, l'invention vise à proposer de nouvelles compositions comprenant des particules synthétiques phyllominérales. En particulier, l'invention vise à proposer une composition comprenant des particules phyllominérales présentant de nouvelles caractéristiques structurelles.

L'invention vise également à proposer une composition comprenant des particules synthétiques phyllominérales présentant une taille sub-micronique.

L'invention vise également à proposer un procédé permettant de préparer des particules synthétiques phyllominérales en des quantités plus importantes et/ou en des temps plus courts et/ou à des températures plus faibles que les autres procédés de l'état de la technique.

L'invention vise également à proposer un procédé de préparation de particules synthétiques phyllominérales dont la durée est considérablement réduite par rapport à la durée de préparation nécessaire dans un procédé de préparation de telles particules décrit dans l'état de la technique, sans nécessiter des températures plus élevées ou même en permettant d'abaisser la température à atteindre au cours dudit procédé de préparation par rapport à un procédé de l'état de la technique.

L'invention vise donc à proposer un tel procédé dont la mise en oeuvre est simple et rapide, et est compatible avec les contraintes d'une exploitation à l'échelle industrielle.

L'invention vise également à proposer un procédé de préparation de compositions comprenant des particules phyllominérales de grande pureté, présentant une granulométrie fine ainsi qu'une faible dispersion granulométrique.

Pour ce faire, l'invention concerne une composition comprenant des particules phyllominérales comprenant au moins un élément chimique constitutif choisi dans le groupe formé du silicium et du germanium, et au moins un élément chimique constitutif choisi dans le groupe formé des métaux divalents et des métaux trivalents, caractérisée en ce que lesdites particules phyllominérales présentent un nombre de feuillets élémentaires moyen inférieur ou égal à 3.

L'invention concerne plus particulièrement une composition comprenant des particules synthétiques, dites particules phyllominérales, de formule chimique $(Si_xGe_{1-x})_4M_3O_{10}(OH)_2$, dans laquelle :

- Si désigne le silicium,
- Ge désigne le germanium,
- x est un nombre réel de l'intervalle [0 ; 1], et
- M désigne au moins un métal divalent ayant pour formule $Mg_{y(1)}CO_{y(2)}\,Zn_{y(3)}Cu_{y(4)}Mn_{y(5)}Fe_{y(6)}Ni_{y(7)}Cr_{y(8)}$ ; chaque y(i) représentant un nombre réel de l'intervalle [0 ; 1], et tel que $\sum_{i=1}^{8} y(i) = 1$,

caractérisée en ce que lesdites particules phyllominérales présentent un nombre de feuillets élémentaires moyen inférieur ou égal à 3 et un diamètre moyen équivalent compris entre 100Å et 500Å.

Dans tout le texte, on désigne par « feuillet élémentaire » d'une particule phyllominérale, tout ensemble comprenant au moins une couche tétraédrique et au moins une couche octaédrique. Les feuillets élémentaires d'une même particule sont liés entre eux par des forces de surface (liaisons de Van der Waals) et ne peuvent pas être séparés les uns des autres par un traitement chimique.

Les inventeurs ont constaté, de manière tout à fait surprenante, que de telles particules phyllominérales présentent un très faible nombre de feuillets élémentaires, c'est-à-dire une épaisseur très faible. L'épaisseur des particules phyllominérales est la dimension des particules qui s'étend selon une direction c* du réseau cristallin des particules phyllominérales.

Une telle composition comprend en effet des particules présentant un très faible nombre de feuillets élémentaires, c'est-à-dire inférieur ou égal à 3, et en particulier compris entre 2 et 3 (valeurs de 2 et 3 comprises).

Dans une variante particulièrement avantageuse, lesdites particules phyllominérales d'une composition selon l'invention présentent un nombre de feuillets élémentaires moyen compris entre 2 et 3.

De telles particules phyllominérales présentent un grand intérêt dans divers domaines de la chimie, notamment en tant que charges fonctionnelles lamellaires dans divers matériaux tels que les polymères, par exemple pour exploiter leur effet barrière, ou encore dans le domaine de la catalyse, par exemple par fonctionnalisation desdites particules phyllominérales.

En particulier, les particules phyllominérales d'une composition selon l'invention présentent l'avantage de présenter d'aussi bonnes propriétés mécaniques et propriétés barrière que des particules présentant un nombre de feuillets élémentaires moyen supérieur à 3, par exemple par rapport à des particules phyllominérales présentant un nombre de feuillets élémentaires moyen supérieur ou égal à 7. L'utilisation des particules phyllominérales d'une composition selon l'invention en tant que charges fonctionnelles dans des matériaux polymères ou des peintures par exemple, permet donc d'abaisser la proportion massique de charges fonctionnelles et donc la masse finale du matériau dans lequel elles sont ajoutées. Ceci est par exemple particulièrement avantageux pour la préparation d'une peinture utilisée dans le domaine aéronautique ou automobile.

Avantageusement et selon l'invention, le nombre de feuillets élémentaires desdites particules phyllominérales contenues dans une composition selon l'invention est déterminé à partir d'une analyse en diffraction des rayons X desdites particules phyllominérales, notamment en utilisant les raies (00$\ell$), et en particulier la raie (001), du diffractogramme de rayons X desdites particules phyllominérales.

Les particules phyllominérales synthétisées étant lamellaires, elles se présentent sous la forme de feuillets dont les dimensions sont généralement définies par une longueur, une largeur et une épaisseur, l'épaisseur correspondant à la plus petite dimension des particules. La longueur et la largeur sont considérées comme situées dans le plan (a, b) du réseau cristallin des particules, tandis que leur plus petite dimension, l'épaisseur, est considérée comme située dans la direction c du réseau cristallin.

Une méthode de détermination du nombre de feuillets élémentaires moyen de particules phyllominérales par une analyse en diffraction des rayons X est par exemple décrite dans les publications suivantes :

- "Sakharov BA, Drits VA. Mixed layered kaolinite-montmorrillonite : A comparison of observed and calculated diffraction pattern. Clays and Clay Minerais 1973 ; 21;15-17",
- "Sakharov BA, Naumov AS, Drits VA, Doklady Akademii Nauk. Intensity of X-Rays scattered by layered structures with short-range factor S greater than 1, G greater than 1 1982 ; 265:871-874",
- "Sakharov BA, Naumov AS, Drits VA, Diffraction of X-Rays by mixed-layered structures with random distribution of packing defects, Doklady Akademii Nauk SSSR. 1982 ; 265;339-343".

Dans tout le texte, on entend par « composition comprenant des particules phyllominérales présentant un nombre de feuillets élémentaires moyen inférieur ou égal à 3 », tout ensemble de particules dont une analyse par diffraction des rayons X de ladite composition et la détermination du nombre de feuillets élémentaires selon la méthode de Sakharov citée ci-dessus permet de mesurer un tel nombre de feuillets élémentaires moyen.

En effet, les inventeurs ont constaté que la majorité, et en particulier l'ensemble, des particules phyllominérales comprises dans une composition selon l'invention présente un nombre de feuillets élémentaires inférieur ou égal à 3, l'écart type de la mesure dudit nombre de feuillets élémentaires moyen étant très faible et inférieur ou égal à 1 feuillet.

Avantageusement et selon l'invention, lesdites particules phyllominérales sont choisies dans le groupe formé des phyllosilicates de charge nulle, et en particulier dans le groupe formé des phyllosilicates ne présentant pas de déficit cationique.

Avantageusement et selon l'invention, lesdites particules phyllominérales sont formées d'un empilement de feuillets élémentaires de type phyllosilicate 2:1 et de formule chimique $(Si_xGe_{1-x})_4M_3O_{10}(OH)_2$, dans laquelle :

- Si désigne le silicium,
- Ge désigne le germanium,
- x est un nombre réel de l'intervalle [0 ; 1], et
- M désigne au moins un métal divalent ayant pour formule $Mg_{y(1)}CO_{y(2)}\ Zn_{y(3)}Cu_{y(4)}Mn_{y(5)}Fe_{y(6)}Ni_{y(7)}Cr_{y(8)}$ ; chaque y(i) représentant un nombre réel de l'intervalle [0 ; 1], et tel que $\sum_{i=1}^{8} y(i) = 1$.

Avantageusement et selon l'invention, lesdites particules phyllominérales présentent une épaisseur inférieure à 40Å et notamment une épaisseur inférieure à 30Å (dans la direction c* du réseau cristallin des particules phyllominérales).

Avantageusement et selon l'invention, lesdites particules phyllominérales présentent un diamètre moyen équivalent inférieur à 1000Å, et plus particulièrement un diamètre moyen équivalent compris entre 100Å et 500Å. Le diamètre moyen desdites particules est mesuré dans le plan (a, b) du réseau cristallin des particules phyllominérales.

L'invention concerne également une composition selon l'invention présentant, en diffraction des rayons X, des raies de diffraction caractéristiques suivantes :

- un plan (001) situé à une distance comprise entre 10,60Å et 12,50Å ;
- un plan (020) situé à une distance comprise entre 4,40Å et 4,60Å ;
- un plan (060) situé à une distance comprise entre 1,51Å et 1,53Å.

Par ailleurs, un spectre en proche infrarouge d'une composition selon l'invention présente des raies caractéristiques des bandes de vibration d'un talc naturel. Avantageusement et selon l'invention, une composition selon l'invention présente, en proche infrarouge, une bande de vibration à $7185cm^{-1}$ représentative de la vibration de la liaison $Mg_3$-OH du talc.

En outre, le spectre en proche infrarouge d'une composition comprenant des particules phyllominérales selon l'invention présente une bande de vibration, située à $7200cm^{-1}$, caractéristique d'une composition comprenant des particules phyllominérales de très petites tailles.

L'invention s'étend à un procédé de préparation d'une composition selon l'invention, dans lequel on réalise un traitement solvothermal par chauffage d'un gel précurseur desdites particules phyllominérales dans un milieu liquide, sous irradiation de micro-ondes.

L'invention s'étend en particulier à un procédé de préparation d'une composition comprenant des particules phyllominérales, formées d'éléments chimiques, dits éléments chimiques constitutifs, lesdits éléments chimiques constitutifs comprenant au moins un élément chimique choisi dans le groupe formé du silicium et du germanium, et au moins un élément chimique choisi dans le groupe formé des métaux divalents et des métaux trivalents, dans lequel :

- on réalise un traitement solvothermal par chauffage d'un gel précurseur desdites particules phyllominérales dans

un milieu liquide, sous irradiation de micro-ondes, ledit gel précurseur comprenant 4 atomes de silicium et/ou de germanium pour 3 atomes d'au moins un métal M, M désignant au moins un métal divalent ayant pour formule $Mg_{y(1)}Co_{y(2)}\ Zn_{y(3)}Cu_{y(4)}Mn_{y(5)}Fe_{y(6)}Ni_{y(7)}Cr_{y(8)}$ dans laquelle chaque y(i) représente un nombre réel de l'intervalle [0 ; 1], et tel que $\sum_{i=1}^{8} y(i) = 1$ (soit une proportion $(Si_xGe_{1-x})/M$ égale à 4/3),

- lesdites particules phyllominérales sont des particules synthétiques phyllosilicatées de formule chimique $(Si_xGe_{1-x})_4M_3O_{10}(OH)_2$, dans laquelle :
  - Si désigne le silicium,
  - Ge désigne le germanium,
  - x est un nombre réel de l'intervalle [0 ; 1], et
  - M désigne au moins un métal divalent ayant pour formule $Mg_{y(1)}Co_{y(2)}\ Zn_{y(3)}Cu_{y(4)}Mn_{y(5)}Fe_{y(6)}Ni_{y(7)}Cr_{y(8)}$ ; chaque *y(i)* représentant un nombre réel de l'intervalle [0 ; 1], et tel que $\sum_{i=1}^{8} y(i) = 1$.

En effet, les inventeurs ont constaté avec surprise qu'un procédé selon l'invention permet de préparer des particules phyllominérales présentant un très faible nombre de feuillets élémentaires, en particulier un nombre de feuillets élémentaires moyen inférieur ou égal à 3, et notamment compris entre 2 et 3.

Avantageusement et selon l'invention, pour réaliser ledit traitement solvothermal, on dispose ledit gel précurseur desdites particules synthétiques phyllominérales dans un réacteur, lui-même disposé à l'intérieur d'un four à micro-ondes. De préférence, le four à micro-ondes est adapté pour permettre l'obtention d'une température homogène au sein du réacteur au cours du traitement solvothermal. Le four à micro-ondes peut donc, si nécessaire, être pourvu d'un dispositif d'agitation mécanique adapté pour pouvoir fonctionner sous irradiation de micro-ondes.

Dans une variante de réalisation d'un procédé selon l'invention, le traitement solvothermal sous irradiation de micro-ondes peut être réalisé en continu, par exemple dans un réacteur continu tel qu'un réacteur tubulaire comprenant un dispositif de chauffage par micro-ondes.

La température du traitement solvothermal sous irradiation de micro-ondes est adaptée pour permettre l'obtention desdites particules phyllominérales synthétiques. La température du traitement solvothermal sous irradiation de micro-ondes peut être comprise entre 100°C et 350°C. Dans une variante de réalisation particulièrement avantageuse d'un procédé selon l'invention, on réalise ledit traitement solvothermal à une température comprise entre 100°C et 250°C.

En particulier, la température de traitement solvothermal ne dépasse pas 250°C dans un cas où le réacteur dans lequel est réalisé le traitement solvothermal est en polytétrafluoroéthylène (PTFE).

Le réacteur dans lequel est réalisé le traitement solvothermal peut présenter toute contenance, par exemple une contenance allant de 5mL à 50L.

La puissance du four à micro-ondes pendant le traitement solvothermal est réglée en fonction de la température souhaitée. Avantageusement et selon l'invention, on réalise un traitement solvothermal par chauffage sous irradiation de micro-ondes avec une puissance comprise entre 10W et 900W. La puissance du four à micro-ondes peut varier au cours du traitement solvothermal, la puissance nécessaire étant en général plus importante au début du traitement solvothermal, afin d'atteindre la température prédéterminée voulue. Une fois la température du traitement solvothermal atteinte, la puissance nécessaire peut diminuer, une puissance de l'ordre de 50W pouvant par exemple être suffisante.

Avantageusement et selon l'invention, on réalise ledit traitement solvothermal à une pression comprise entre 0,5MPa et 20MPa, notamment entre 0,5MPa et 11MPa. En outre, un dispositif de régulation de la pression dans le réacteur peut être prévu de façon à éviter que la pression dans le réacteur ne dépasse une valeur prédéterminée, par exemple de 11MPa.

La durée du traitement solvothermal est adaptée pour permettre l'obtention desdites particules phyllominérales synthétiques, en fonction notamment de la température à laquelle est réalisé le traitement solvothermal. Avantageusement et selon l'invention, on réalise ledit traitement solvothermal pendant une durée prédéterminée supérieure à 30 secondes. Avantageusement et selon l'invention, on réalise ledit traitement solvothermal pendant une durée prédéterminée comprise entre 30 secondes et 5 heures. Un chauffage par micro-ondes permettant d'atteindre rapidement une température suffisante, notamment une température supérieure ou égale à 100°C, des particules phyllominérales présentant un nombre de feuillets élémentaires moyen inférieur ou égal à 3 et un diamètre moyen équivalent compris entre 100Å et 500Å peuvent être obtenues en quelques secondes ou minutes. D'autre part, il est également possible de prolonger la durée du traitement solvothermal au-delà de 5 heures, par exemple 24 heures ou plus sans diminuer la qualité des particules phyllominérales obtenues. Dans une variante particulièrement avantageuse d'un procédé selon

l'invention, on réalise ledit traitement solvothermal pendant une durée prédéterminée inférieure à 15 minutes. En effet, une durée inférieure à 15 minutes, notamment comprise entre 30 secondes et 15 minutes suffit pour permettre d'obtenir des particules phyllominérales présentant un nombre de feuillets élémentaires moyen inférieur ou égal à 3 et un diamètre moyen équivalent compris entre 100Å et 500Å.

Dans une variante de réalisation particulièrement avantageuse d'un procédé selon l'invention, des températures inférieures à 250°C et des durées de traitement solvothermal sous irradiation de micro-ondes inférieures à 90 minutes, notamment inférieures à 60 minutes, par exemple comprises entre 30 secondes et 30 minutes, suffisent pour obtenir des particules phyllominérales synthétiques présentant un nombre de feuillets élémentaires inférieur ou égal à 3.

Le milieu liquide dans lequel on réalise ledit traitement solvothermal est choisi de façon à pouvoir être chauffé sous irradiation de micro-ondes. Avantageusement et selon l'invention, le milieu liquide dans lequel on réalise ledit traitement solvothermal est au moins partiellement hydraté (le traitement solvothermal de ce milieu réactionnel pouvant alors être qualifié de traitement hydrothermal). Avantageusement et selon l'invention, on choisit ledit milieu liquide parmi l'eau, les alcools et leurs mélanges. Dans une variante avantageuse d'un procédé selon l'invention, on choisit lesdits alcools parmi les alcools, linéaires ou ramifiés, comprenant moins de 10 atomes de carbone, notamment comprenant moins de 7 atomes de carbone, en particulier parmi le méthanol, l'éthanol, le propanol, l'isopropanol, le butanol, le pentanol, l'hexanol, le propylène glycol et l'éthylène glycol. Le milieu liquide dans lequel est réalisé ledit traitement solvothermal peut par exemple être préparé uniquement avec de l'eau ou encore avec un mélange d'eau et d'au moins un alcool.

Avantageusement et selon l'invention, on prépare ledit gel précurseur desdites particules phyllominérales par une réaction de co-précipitation entre :

- au moins un composé minéral comprenant au moins un atome de silicium et/ou de germanium, et
- au moins un composé comprenant au moins un élément métallique.

Avantageusement et selon l'invention, on utilise, à titre de composé minéral, tout composé comprenant au moins un atome de silicium et/ou de germanium adapté pour réagir dans ladite réaction de co-précipitation dudit gel précurseur. En particulier, avantageusement et selon l'invention, ledit composé minéral est choisi dans le groupe constitué des silicates de sodium et des silices (dioxydes de silicium). En particulier, avantageusement et selon l'invention, on utilise du métasilicate de sodium à titre de composé minéral.

Dans une variante particulièrement avantageuse d'un procédé selon l'invention, on utilise, à titre de composé comprenant au moins un élément métallique, un sel métallique d'au moins un métal M. Il peut par exemple s'agir d'un sel dicarboxylate de formule $M(R_1\text{-}COO)_2$ dans laquelle :

- $R_1$ est choisi parmi l'hydrogène H et les groupements alkyles comprenant moins de 5 atomes de carbone et,
- M désigne au moins un métal divalent ayant pour formule $Mg_{y(1)}Co_{y(2)}\,Zn_{y(3)}Cu_{y(4)}Mn_{y(5)}Fe_{y(6)}Ni_{y(7)}Cr_{y(8)}$ ; chaque y(i) représentant un nombre réel de l'intervalle [0 ; 1], et tel que $\sum_{i=1}^{8} y(i) = 1$.

En outre, avantageusement et selon l'invention, on réalise ladite réaction de co-précipitation dudit gel précurseur en présence d'au moins un sel carboxylate de formule $R_2\text{-}COOM'$ dans laquelle :

- M' désigne un métal choisi dans le groupe formé de Na et K, et
- $R_2$ est choisi parmi H et les groupements alkyles comprenant moins de 5 atomes de carbone.

On constate avec surprise que ce sel carboxylate n'est pas dégradé par le traitement solvothermal, et participe au contraire à l'efficacité et à la rapidité de ce dernier. Les groupements $R_1$ et $R_2$ peuvent être identiques ou différents. Avantageusement et selon l'invention, les groupements $R_1$ et $R_2$ sont choisis dans le groupe formé de $CH_3$-, $CH_3\text{-}CH_2$- et $CH_3\text{-}CH_2\text{-}CH_2$-. En particulier, avantageusement et selon l'invention, les groupements $R_1$ et $R_2$ sont identiques.

Avantageusement et selon l'invention, les espèces de départ utilisées pour préparer ledit gel précurseur desdites particules phyllominérales sont solubles dans l'eau.

Avantageusement et selon l'invention, le gel précurseur comprend 4 atomes de silicium et/ou de germanium pour 3 atomes d'au moins un métal M, M désignant au moins un métal divalent ayant pour formule $Mg_{y(1)}Co_{y(2)}\,Zn_{y(3)}Cu_{y(4)}Mn_{y(5)}Fe_{y(6)}Ni_{y(7)}Cr_{y(8)}$ dans laquelle chaque y(i) représente un nombre réel de l'intervalle [0 ; 1], et tel que $\sum_{i=1}^{8} y(i) = 1$ (soit une proportion $(Si_xGe_{1-x})/M$ égale à 4/3, par exemple une proportion Si/Mg de 4/3 pour obtenir des

particules de talc, x étant égal à 4 et M désignant le magnésium Mg).

Dans une variante particulièrement avantageuse d'un procédé selon l'invention, on utilise, à titre de gel précurseur, un hydrogel précurseur comprenant :

- 4 atomes de silicium et/ou de germanium d'après la formule chimique suivante : 4 $(Si_xGe_{1-x})$, x étant un nombre réel de l'intervalle [0 ; 1],
- 3 atomes d'au moins un métal M, M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ dans laquelle chaque *y(i)* représente un nombre réel de l'intervalle [0; 1], et tel que $\sum_{i=1}^{8} y(i) = 1$,
- (10-ε) atomes d'oxygène ((10-ε) O), ε étant un nombre réel de l'intervalle [0 ; 10[,
- (2+ε) groupements hydroxyle ((2+ε) (OH)), ε étant un nombre réel de l'intervalle [0 ; 10[.

On peut donc utiliser comme formule chimique pour un tel hydrogel précurseur, la formule chimique (I) suivante :

$$4\ (Si_xGe_{1-x})\ 3\ M\ ((10-\varepsilon)\ O)\ ((2+\varepsilon)\ (OH)) \qquad (I).$$

Des molécules d'eau peuvent en outre être liées aux particules de cet hydrogel précurseur. Il s'agit de molécules d'eau adsorbées ou physisorbées aux particules d'hydrogel précurseur et non de molécules d'eau de constitution habituellement présentes dans les espaces interfoliaires de certaines particules phyllosilicatées.

Un tel hydrogel silico/germano-métallique précurseur peut être obtenu par une réaction de co-précipitation entre au moins un composé minéral, choisi parmi les silicates, les germanates, leurs solutions solides et leurs mélanges, et au moins un sel métallique d'au moins un métal divalent M.

Dans un mode de réalisation particulièrement avantageux d'un procédé selon l'invention, ledit hydrogel silico/germano-métallique est un hydrogel silico-métallique ayant pour formule la formule chimique suivante :

$$4\ Si\ 3\ M\ ((10-\varepsilon)\ O)\ ((2+\varepsilon)\ (OH))$$

Une autre formule chimique permettant de définir ledit hydrogel silico/germano-métallique est la formule suivante : $(Si_xGe_{1-x})_4M_3O_{11}$, n'$H_2O$, ou encore $Si_4M_3O_{11}$, n'$H_2O$ en ce qui concerne un hydrogel silico-métallique. D'autre part, il est également possible de rajouter un agent de greffage avant de réaliser ledit traitement solvothermal ou au cours de la préparation dudit hydrogel précurseur (c'est-à-dire lors de la coprécipitation de l'hydrogel précurseur, en plus du composé minéral comprenant au moins un atome de silicium et/ou de germanium et du composé comprenant au moins un élément métallique). Un tel agent de greffage (ou agent de fonctionnalisation) peut par exemple être un oxysilane soluble dans l'eau et ayant pour formule (III) :

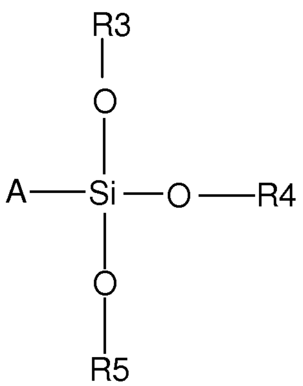

(III)

dans laquelle A désigne un groupement choisi parmi un méthyle et les groupements hydrocarbonés comprenant au moins un hétéroatome ; et R3, R4 et R5, sont identiques ou différents, et choisis parmi un hydrogène et les groupements alkyles linéaires comprenant 1 à 3 atome(s) de carbone.

Ledit oxysilane peut par exemple être un trialcoxysilane soluble en milieu aqueux et de formule suivante :

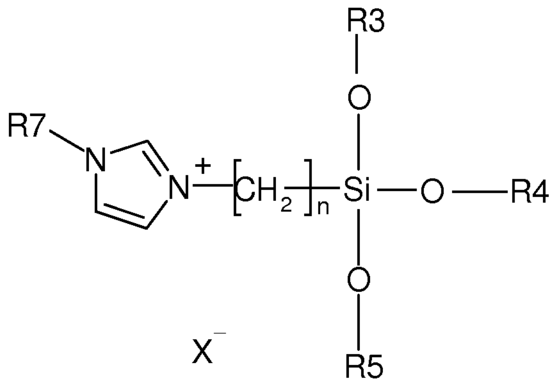

dans laquelle :

- R3, R4 et R5, sont identiques ou différents, et choisis parmi les groupements alkyles linéaires comprenant 1 à 3 atome(s) de carbone,
- R7 est choisi parmi les groupements alkyles linéaires comprenant 1 à 18 atome(s) de carbone,
- n est un nombre entier compris entre 1 et 5, et
- $X^-$ est un anion dont la stabilité thermique est compatible avec la température et le temps de séjour du traitement solvothermal, et par exemple un anion dans lequel X est choisi parmi le chlore, l'iode et le brome.

Avantageusement et selon l'invention, on rajoute dans le réacteur, avec ledit hydrogel, et en particulier avec ledit hydrogel silico/germano-métallique, une quantité d'eau (de préférence de l'eau distillée) au moins suffisante pour créer, à l'intérieur de cet autoclave porté à la température de traitement hydrothermal, une atmosphère de vapeur saturante.

Avantageusement et selon l'invention, on réalise le traitement solvothermal avec un hydrogel, en particulier un hydrogel silico/germano-métallique, liquéfié ayant un rapport liquide/solide compris entre 2 et 20, notamment entre 5 et 15 (la quantité de liquide étant exprimée en $cm^3$, et la quantité de solide, en grammes, et désignant la quantité d'hydrogel sec uniquement, c'est-à-dire sans prendre en compte le(s) sel(s) carboxylate). Eventuellement, si nécessaire, on rajoute audit hydrogel silico/germano-métallique liquéfié une quantité d'eau appropriée pour atteindre ce rapport.

Dans une variante de réalisation d'un procédé selon l'invention, il est possible de réaliser, après au moins un premier traitement solvothermal sous irradiation de micro-ondes, au moins un autre traitement solvothermal, et en particulier un traitement solvothermal en l'absence d'irradiation de micro-ondes. Le traitement solvothermal en l'absence d'irradiation de micro-ondes peut notamment être réalisé à une température différente de la température du traitement solvothermal sous irradiation de micro-ondes préalable. Avantageusement et selon l'invention, après ledit traitement solvothermal sous irradiation de micro-ondes, on réalise un traitement solvothermal sans irradiation de micro-ondes, à une température comprise entre 250°C et 400°C, notamment entre 300°C et 370°C. Avantageusement et selon l'invention, après un traitement solvothermal sous irradiation de micro-ondes dont la durée est inférieure à 60 minutes, notamment inférieure à 30 minutes, on réalise un traitement solvothermal sans irradiation de micro-ondes pendant une durée comprise entre 30 minutes et 15 jours, notamment entre 2 heures et 24 heures.

La réalisation d'un tel traitement solvothermal en l'absence d'irradiation de micro-ondes, à une température supérieure à celle à laquelle est réalisé le traitement solvothermal sous irradiation de micro-ondes préalable, permet notamment d'augmenter la cristallinité des particules phyllominérales.

Les inventeurs ont en effet observé qu'un tel traitement solvothermal sous irradiation de micro-ondes suivi d'un tel traitement solvothermal en l'absence d'irradiation de micro-ondes permet d'obtenir une composition de particules phyllominérales présentant d'excellentes propriétés structurelles et cristallines. En particulier, la réalisation d'un traitement solvothermal sous irradiation de micro-ondes, notamment d'une durée inférieure à 30 minutes, par exemple de 10 minutes seulement, préalablement à un traitement solvothermal en l'absence d'irradiation de micro-ondes, permet de diminuer la durée dudit traitement solvothermal en l'absence d'irradiation de micro-ondes (et en particulier la durée totale des traitements solvothermaux avec et sans irradiation de micro-ondes) nécessaire pour augmenter la cristallinité des particules phyllominérales.

Il peut par exemple être réalisé un premier traitement solvothermal sous irradiation de micro-ondes à une température comprise entre 200°C et 250°C, puis un traitement solvothermal en l'absence d'irradiation de micro-ondes à une température comprise entre 300°C et 350°C.

Ledit traitement solvothermal en l'absence d'irradiation de micro-ondes peut être réalisé à une pression comprise entre 0,5MPa et 20MPa, notamment sous pression autogène, c'est-à-dire à une pression au moins égale à la pression

de vapeur saturante de l'eau (pression à laquelle la phase vapeur est en équilibre avec la phase liquide) ou à une pression supérieure à la pression de vapeur saturante de l'eau ou à la pression autogène, dans le récipient dans lequel a lieu le traitement solvothermal.

Ledit traitement solvothermal en l'absence d'irradiation de micro-ondes est également avantageusement réalisé en présence d'un sel carboxylate tel que défini précédemment.

En particulier, une composition obtenue par un tel procédé selon l'invention dans lequel on réalise, après ledit traitement solvothermal sous irradiation de micro-ondes, au moins un traitement solvothermal sans irradiation de micro-ondes présente, en diffraction des rayons X, des raies de diffraction caractéristiques suivantes :

- un plan (001) situé à une distance comprise entre 9,40Å et 10,00Å ;
- un plan (002) situé à une distance comprise entre 4,60Å et 4,90Å ;
- un plan (020) situé à une distance comprise entre 4,40Å et 4,60Å ;
- un plan (003) situé à une distance comprise entre 3,10Å et 3,20Å ;
- un plan (060) situé à une distance comprise entre 1,51Å et 1,53Å.

L'invention concerne aussi une composition et un procédé caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentiel donnée à titre d'exemple non limitatif, et qui se réfère aux figures annexées dans lesquelles :

- la figure 1 est une vue schématique d'un dispositif de préparation de particules synthétiques phyllominérales mis en oeuvre dans un procédé selon l'invention,
- les figures 2, 3, 6 et 7 représentent des diffractogrammes de rayons X (RX) de particules phyllominérales obtenues par les exemples donnés ci-après avec un procédé selon l'invention,
- la figure 4 représente l'évolution de la position de la raie de diffraction (001) en diffraction de rayons X en fonction du nombre de feuillets élémentaires de particules phyllominérales, d'après la méthode de Sakharov,
- la figure 5 représente des spectres obtenus par Résonance Magnétique Nucléaire (RMN) du silicium de particules synthétiques phyllominérales obtenues par les exemples donnés ci-après avec un procédé selon l'invention.

A/ - PROTOCOLE GÉNÉRAL DE PRÉPARATION DE PARTICULES SYNTHÉTIQUES PHYLLOMINÉRALES SELON L'INVENTION

1/ - Dispositif de préparation de particules synthétiques phyllominérales

La figure 1 représente un dispositif 1 de préparation de particules synthétiques phyllominérales selon l'invention.

Le gel précurseur desdites particules synthétiques phyllominérales est placé dans un réacteur 2. Le réacteur est par exemple formé en polytétrafluoroéthylène. Il est muni d'un couvercle 3 comprenant un ressort 4 faisant office de régulateur de la pression à l'intérieur du réacteur 2, et d'un thermocouple 5 qui trempe dans une solution 7 disposée dans le réacteur 2. Le réacteur 2 est disposé à l'intérieur d'un four 6 à micro-ondes.

Le four 6 à micro-ondes utilisé peut par exemple être un four commercialisé par la société Milestone Srl (Sorisole, Italie) sous la référence Milestone Start D® dont la cavité interne mesure 40L. Un tel four à micro-ondes présente une cavité dite multimode, au sein de laquelle les micro-ondes sont distribuées de façon homogène. Un tel four à micro-ondes est dépourvu de dispositif d'agitation magnétique.

2/ - Préparation d'un gel précurseur silico/germano-métallique

Le gel silico/germano-métallique peut être préparé par une réaction de co-précipitation impliquant, à titre de réactif, au moins un composé minéral comprenant du silicium et/ou du germanium, au moins un sel dicarboxylate de formule $M(R_1\text{-}COO)_2$ (M désignant au moins un métal divalent ou trivalent et $R_1$ étant choisi parmi l'hydrogène (-H) et les groupements alkyles comprenant moins de 5 atomes de carbone) en présence d'au moins un sel carboxylate de formule $R_2COOM'$ dans laquelle M' désigne un métal choisi dans le groupe formé de Na et K, et $R_2$ est choisi parmi l'hydrogène (-H) et les groupements alkyles comprenant moins de cinq atomes de carbone.

Cette réaction de co-précipitation permet d'obtenir un hydrogel silico/germano-métallique hydraté ayant la stoechiométrie du talc (4 Si/Ge pour 3 M, M ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque

y(i) représentant un nombre réel de l'intervalle [0 ; 1], et tel que $\sum_{i=1}^{8} y(i) = 1$.

Le gel silico/germano-métallique est préparé par une réaction de co-précipitation mise en oeuvre à partir de :

1. une solution aqueuse de métasilicate de sodium penta-hydraté ou une solution aqueuse de métagermanate de sodium, ou un mélange de ces deux solutions dans les proportions molaires *x/(1-x),*

2. une solution de sel(s) dicarboxylate, préparée avec un ou plusieurs sel(s) dicarboxylate de formule $M(R_1\text{-}COO)_2$ dilué(s) dans un acide carboxylique, tel que l'acide acétique, et

3. une solution de sel(s) carboxylate, préparée avec un ou plusieurs sel(s) carboxylate de formule $R_2\text{-}COOM'$ dilué(s) dans de l'eau distillée.

La préparation de cet hydrogel silico/germano-métallique est réalisée en suivant le protocole suivant :

1. on mélange les solutions de métasilicate et/ou de métagermanate de sodium et de sel(s) carboxylate de formule $R_2\text{-}COOM'$,
2. on y ajoute rapidement la solution de sel(s) dicarboxylate de formule $M(R_1\text{-}COO)_2$ ; l'hydrogel de coprécipitation se forme instantanément.

En outre, il est possible de soumettre le milieu de préparation dudit hydrogel aux ultrasons.

A l'issue de cette précipitation on obtient un hydrogel silico/germano-métallique comprenant :

- 4 ($Si_xGe_{1-x}$),
- 3 atomes d'au moins un métal M, M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ dans laquelle chaque y(i) représente un nombre réel de l'intervalle [0; 1], et tel que $\sum_{i=1}^{8} y(i) = 1$,
- (10-ε) atomes d'oxygène ((10-ε) O), ε étant un nombre réel de l'intervalle [0 ; 10[,
- (2+ε) groupements hydroxyle ((2+ε) (OH)), ε étant un nombre réel de l'intervalle [0 ; 10[,

dans une solution aqueuse de sel(s) carboxylate ledit hydrogel étant fortement hydraté (des molécules d'eau étant liées aux particules d'hydrogel sans qu'il s'agisse d'eau de constitution) et présentant une consistance plus ou moins gélatineuse.

L'hydrogel peut également être récupéré après centrifugation (par exemple entre 3000 et 15000 tours par minute, pendant 5 à 60 minutes) et élimination du surnageant (solution de sel(s) carboxylate), éventuellement lavage à l'eau déminéralisée (par exemple deux lavages et centrifugations successifs) puis séchage, par exemple dans une étuve (60°C, 2 jours), par lyophilisation, par séchage par atomisation ou encore par séchage sous irradiation de micro-ondes. Les particules silico/germano-métalliques de formule (I) suivante :

$$4\ (Si_xGe_{1-x})\ 3\ M\ ((10\text{-}\varepsilon)\ O)\ ((2+\varepsilon)\ (OH))$$

peuvent ainsi être stockées sous la forme d'une poudre (en présence ou non du ou des sel(s) carboxylateselon qu'un lavage à l'eau a été effectué ou non) en vue d'un traitement solvothermal, en particulier d'un traitement hydrothermal, ultérieur.

3/ - Traitement solvothermal dudit hydrogel silico/germano-métallique

L'hydrogel précurseur de formule (I) précitée séché ou non, tel que précédemment obtenu, est disposé dans le réacteur 2 et est soumis à un traitement solvothermal, en particulier un traitement hydrothermal, dans le four 6 à micro-ondes.

Le four 6 à micro-ondes comprend un programmateur permettant de fixer la température souhaitée (ou le profil de températures souhaité) pour réaliser le traitement solvothermal. La température au sein du réacteur 2 est mesurée par le thermocouple 5 tout au long du traitement solvothermal et la puissance du four 6 à micro-ondes est automatiquement ajustée en conséquence pour atteindre ou maintenir la température de consigne.

À l'issue de ce traitement hydrothermal, on obtient une suspension comprenant des particules minérales phyllosilicatées dans une solution aqueuse de sel(s) carboxylate. Au terme de ce traitement solvothermal, la suspension obtenue est récupérée par filtration, par exemple à l'aide d'un fritté en céramique, ou encore par centrifugation (entre 3000 et 15000 tours par minute, pendant 5 à 60 minutes) puis élimination du surnageant. La solution surnageante contient un ou des sel(s) de formules $R_1$-COOM' et/ou $R_2$-COOM' et peut être conservée en vue de récupérer ce(s) sel(s) carboxylate et de le(s) recycler.

La composition comprenant des particules minérales récupérée peut éventuellement être lavée avec de l'eau, en particulier avec de l'eau distillée ou osmosée, en effectuant par exemple un ou deux cycles de lavage/centrifugation.

La composition comprenant des particules minérales récupérée après la dernière centrifugation peut ensuite être séchée :

- à l'étuve à une température comprise entre 60°C et 130°C, pendant 1 à 24 heures, ou encore,
- par lyophilisation, par exemple dans un lyophilisateur de type CHRIST ALPHA® 1-2 LD Plus, pendant 48 heures à 72 heures,
- par irradiation de micro-ondes,
- par atomisation,
- ou encore par toute autre technique de séchage de poudre.

On obtient au final une composition solide divisée dont la couleur est fonction de la nature du (ou des) sel(s) dicarboxylate de formule $M(R_1\text{-COO})_2$ utilisé(s) pour la préparation du gel silico/germano-métallique (et également, le cas échéant, des proportions respectives de ce(s) sel(s) dicarboxylate).

Les inventeurs ont ainsi pu noter que, non seulement, des temps très courts (moins de 15 minutes) de traitement solvothermal, en particulier d'un traitement hydrothermal, sous irradiation de micro-ondes suffisent pour permettre une conversion du gel initial en un matériau cristallisé et thermiquement stable, mais, également, que les particules minérales synthétiques obtenues présentent un nombre de feuillets élémentaires très faible, en particulier un nombre de feuillets élémentaires moyen inférieur ou égal à 3.

Les particules minérales phyllosilicatées contenues dans une composition talqueuse obtenue par un procédé selon l'invention présentent des propriétés remarquables en termes de pureté, de cristallinité et de stabilité thermique, et ce, pour une durée de traitement solvothermal extrêmement réduite (par rapport à la durée de traitement solvothermal auparavant nécessaire dans un procédé de préparation de composition talqueuse connu), et sans nécessiter un traitement thermique anhydre (recuit) ultérieur.

B/ - ANALYSE ET CARACTERISATION STRUCTURELLE

Les résultats d'analyse d'une composition talqueuse obtenue en suivant le protocole précédemment exposé sont ci-après rapportés. Ces résultats confirment que l'invention permet effectivement d'aboutir à la formation de particules minérales phyllosilicatées synthétiques comprenant un très faible nombre de feuillets élémentaires tout en présentant une lamellarité et une cristallinité similaires à celles des talcs naturels. Ils montrent aussi que, notamment par le choix de la température et de la durée de mise en oeuvre, l'invention permet de synthétiser, de façon extrêmement simple, en utilisant un mode de chauffage par micro-ondes des particules minérales silico/germano-métalliques synthétiques, stables et pures, ayant une taille et des caractéristiques cristallines définies et prévisibles.

Les analyses ont notamment été réalisées par diffraction des rayons X et par Résonance Magnétique Nucléaire (RMN) du solide. Les données recueillies sont présentées aux figures annexées et dans les exemples, et sont ci-après commentées.

1/ - Analyses en diffraction des rayons X

En diffraction des rayons X (RX), un talc naturel tel qu'un talc provenant de la mine d'ARNOLD (État de New-York, USA), est connu pour présenter les raies de diffraction caractéristiques suivantes (d'après la publication de Ross M., Smith W.L. et Ashton W.H., 1968, « Triclinic talc and associated amphiboles from Gouverneur mining district, New York ; American Mineralogist », volume 53, pages 751-769) :

- pour le plan (001), une raie située à une distance de 9,34Å ;
- pour le plan (002), une raie située à une distance de 4,68Å ;
- pour le plan (020), une raie située à une distance de 4,56Å ;
- pour le plan (003), une raie située à une distance de 3,115Å ;
- pour le plan (060), une raie située à une distance de 1,52Å.

Les figures 2 et 3 présentent des diffractogrammes de rayons X des particules obtenues dans les exemples ci-après, sur chacun desquels est représentée l'intensité relative du signal (nombre de coups par seconde) en fonction de l'angle de diffraction $2\theta$.

Les diffractogrammes de rayons X représentés ont été enregistrés sur un appareil CPS 120 commercialisé par la société INEL (Artenay, France). Il s'agit d'un diffractomètre à détecteur courbe permettant une détection en temps réel sur un domaine angulaire de 120°. La tension d'accélération utilisée est de 40kV et l'intensité de 25mA. La relation de Bragg donnant l'équidistance structurale est : $d_{hkl}$=0,89449/sin$\theta$ (avec l'utilisation d'une anticathode au cobalt).

Cette analyse par diffraction des rayons X confirme qu'il existe une grande similitude structurelle entre les particules phyllominérales des compositions selon l'invention et des particules de talc naturel.

En particulier, les raies de diffraction qui correspondent au plan (060) ont des positions qui coïncident parfaitement avec celles des raies de diffraction de référence pour le talc naturel.

La courbe représentée en figure 4 présente l'évolution de la position de la raie de diffraction (001) (angles de diffraction $2\theta$ en abcisses) en fonction du nombre de feuillets élémentaires des particules phyllominérales (en ordonnées et présentée avec une échelle logarithmique). Cette courbe permet donc de déterminer le nombre de feuillets élémentaires moyen d'une composition de particules phyllominérales selon l'invention. Elle est obtenue à partir d'une modélisation des diffractogrammes de rayons X pour un nombre de feuillets élémentaires empilés dans la direction c* allant de 2 à 50 utilisant les algorithmes développés par Sakharov (selon la méthode décrite précédemment). Cette modélisation permet de voir que le maximum de la raie de diffraction (001) est décalée vers les angles les plus faibles lorsque le nombre de feuillets élémentaires diminue tel qu'illustré par la figure 4.

2/ - Analyses RMN

La figure 5 représente des spectres de RMN du silicium des particules obtenues dans les exemples ci-après. Ces spectres RMN ont été réalisés à l'aide d'un spectromètre BRUKER® Avance 400®. Les déplacements chimiques sont représentés en ppm sur l'axe des abscisses.

Les exemples qui suivent illustrent le procédé de préparation selon l'invention et les caractéristiques structurales des compositions comprenant des particules phyllominérales synthétiques, et en particulier des compositions talqueuses comprenant des particules minérales phyllosilicatées, ainsi obtenues.

EXEMPLES 1 à 9

On prépare d'une part une solution de métasilicate de sodium en ajoutant 42,43g de métasilicate de sodium pentahydraté ($Na_2OSiO_2$, $5H_2O$) dans 130mL d'eau distillée, à laquelle on ajoute 171g d'acétate de sodium trihydraté ($CH_3COONa$, $3H_2O$).

D'autre part, on prépare une solution d'acétate de magnésium en ajoutant 32,16g d'acétate de magnésium tétrahydraté ($Mg(CH_3COO)_2$, $4H_2O$) dans 100mL d'acide acétique $CH_3COOH$ à 1mol/L.

On mélange les solutions de métasilicate de sodium et d'acétate de magnésium. L'hydrogel de coprécipitation se forme instantanément.

On obtient un gel précurseur desdites particules synthétiques phyllominérales, il s'agit d'un hydrogel précurseur de formule chimique suivante :

$$4\ Si\ 3\ Mg\ ((10-\varepsilon)\ O)\ ((2+\varepsilon)\ (OH))$$

On soumet ensuite 9 échantillons dudit hydrogel précurseur à un traitement hydrothermal sous irradiation de micro-ondes.

On prépare 9 compositions de particules synthétiques phyllominérales en faisant varier la température et la durée du traitement hydrothermal sous irradiation de micro-ondes, et éventuellement en réalisant, suite audit traitement hydrothermal, un traitement thermique anhydre, conformément au tableau 1 suivant :

| Exemples | 1 | 2 | 3 | 4 | 5 | 6 | 7 | 8 | 9 |
|---|---|---|---|---|---|---|---|---|---|
| Température (°C) | 230 | 230 | 230 | 230 | 230 | 230 | 100 | 150 | 200 |
| Durée (minutes) | 1 | 10 | 10 | 30 | 90 | 180 | 10 | 10 | 10 |
| Traitement thermique anhydre | - | - | 550°C 5h | - | - | - | - | - | - |
| Courbes | 10 | 11 | 12 | 13 | 14 | 15 | 16 | 17 | 18 |

Les diffractogrammes de rayons X (RX) des particules phyllosilicatées obtenues aux exemples 1 à 6 sont respectivement représentés par les courbes 10 à 15 sur la figure 2.

Sur la figure 2, sont également représentés, à titre d'exemples comparatifs, les diffractogrammes de rayons X de particules dudit hydrogel précurseur avant traitement hydrothermal (courbe 20) et des particules phyllosilicatées obtenues par un traitement hydrothermal en l'absence de micro-ondes à une température de 300°C pendant 6 heures (courbe 21) et à une température de 300°C pendant 1 heure (courbe 22), selon le protocole décrit par WO2013/004979.

Les diffractogrammes de rayons X des particules phyllosilicatées obtenues aux exemples 7 à 9 et 2 sont respectivement représentés par les courbes 16 à 18 et 11 sur la figure 3. Sur la courbe 18, sont signalées par des astérisques, des raies représentatives de la présence d'acétate de sodium dans l'échantillon.

Les diffractogrammes RX des compositions de particules phyllosilicatées obtenues aux exemples 1 à 6 présentent des raies de diffraction caractéristiques présentées dans le tableau 2 suivant :

| Exemples | | 1 | 2 | 3 | 4 | 5 | 6 |
|---|---|---|---|---|---|---|---|
| plan (001) | d (Å) | 12,23 | 12,33 | 12,28 | 12,10 | 11,88 | 11,74 |
| plan (020) | d (Å) | 4,48 | 4,50 | 4,49 | 4,50 | 4,51 | 4,52 |
| plan (060) | d (Å) | 1,53 | 1,53 | 1,53 | 1,53 | 1,52 | 1,52 |

L'analyse des diffractogrammes RX des compositions de particules phyllosilicatées obtenues aux exemples 1 à 9 permet de déterminer, en utilisant la raie de diffraction caractéristique du plan (001), le nombre de feuillets élémentaires desdites particules en utilisant les algorithmes définis dans la méthode décrite par Sakharov. Ces calculs montrent que la raie de diffraction caractéristique du plan (001) est décalée vers les petits angles lorsque le nombre de feuillets élémentaires desdites particules diminue.

Les résultats obtenus montrent que le nombre de feuillets élémentaires moyen des compositions de particules obtenues aux exemples 1 à 9 est compris entre 2 et 3.

Les spectres de RMN du silicium des particules phyllosilicatées obtenues aux exemples 2 et 5 sont respectivement représentés par les courbes 30 et 31 sur la figure 5.

Sur la figure 5, sont également représentés, à titre d'exemples comparatifs, les spectres de RMN du silicium de particules dudit hydrogel précurseur avant traitement hydrothermal (courbe 32) et des particules phyllosilicatées obtenues par un traitement hydrothermal en l'absence de micro-ondes à une température de 300°C pendant 6 heures (courbe 33), selon le protocole décrit par WO2013/004979.

Ces spectres RMN permettent d'identifier la présence de groupements Si-O-Si (déplacements chimiques compris entre -80ppm et -100ppm). En particulier, dès 10 minutes de traitement hydrothermal sous irradiation de micro-ondes (exemple 2, courbe 30), les bandes caractéristiques du talc synthétique sont observées. La bande située entre -90ppm et -100ppm correspond, d'après une décomposition Lorentzienne de celle-ci, à une superposition de bandes situées à - 95ppm et -97ppm représentatives respectivement des environnements appelés $Q^2$ et $Q^3$ (Q signifiant que chaque atome de silicium (Si) est lié à quatre atomes d'oxygène (formant des tétraèdres $SiO_4$) et les chiffres 2 et 3 sont représentatifs du nombre d'atomes de silicium voisins). Les bandes à -95ppm correspondent aux environnements $Q^2$ de bordure. Ces bandes à -95ppm sont prédominantes et montrent que les particules phyllosilicatées obtenues présentent une taille très réduite.

Le signal à -85ppm correspond aux environnements $Q^2$ isolés et diminue avec l'augmentation de la durée du traitement hydrothermal sous irradiation de micro-ondes, en faveur d'une augmentation des signaux correspondant aux environnements $Q^2$ de bordure et $Q^3$.

Les analyses en diffraction de rayons X et en RMN du silicium des compositions selon l'invention montrent qu'un traitement hydrothermal sous irradiation de micro-ondes permet d'obtenir des particules phyllominérales telles que des particules phyllosilicatées, notamment des particules de talc synthétique, présentant moins de 3 feuillets élémentaires, après des durées de traitement hydrothermal considérablement réduites (quelques minutes) et à des températures également réduites par rapport aux procédés de l'état de la technique.

EXEMPLES 10 à 14

On prépare 5 échantillons d'hydrogel précurseur de la même manière qu'aux exemples 1 à 9 décrits précédemment.

On soumet ensuite 3 échantillons (exemples 10 à 12 selon l'invention) dudit hydrogel précurseur à un court traitement hydrothermal sous irradiation de micro-ondes (1 minute ou 10 minutes) à 230°C, suivi d'un traitement hydrothermal en l'absence de micro-ondes, à 300°C, pendant une durée plus importante.

On prépare 5 compositions de particules synthétiques phyllominérales en faisant varier la durée du traitement hydrothermal sous irradiation de micro-ondes, le cas échéant, ainsi que la température et la durée dudit traitement hydrothermal en l'absence de micro-ondes conformément au tableau 3 suivant :

| Exemples | | 10 | 11 | 12 | 13 | 14 |
|---|---|---|---|---|---|---|
| Traitement hydrothermal sous micro-ondes | Température | 230°C | 230°C | 230°C | - | - |
| | Durée | 10min | 1min | 10min | - | - |
| Traitement hydrothermal sans micro-ondes | Température | 300°C | 300°C | 300°C | 300°C | 300°C |
| | Durée | 6h | 2h | 2h | 6h | 2h |
| Courbes | | 40 | 41 | 42 | 43 | 44 |

Les diffractogrammes de rayons X des particules phyllosilicatées obtenues aux exemples 10 et 13 sont respectivement représentés par les courbes 40 et 43 sur la figure 6. Le diffractogramme des rayons X de l'exemple 13 (courbe 43) est représenté sur la figure 6 à titre d'exemple comparatif.

On observe, sur la figure 6, que l'intensité des raies de diffraction de rayons X de l'exemple 10 est supérieure à celle des raies de diffraction de rayons X de l'exemple 13, ce qui reflète une plus grande cristallinité.

Les diffractogrammes de rayons X des particules phyllosilicatées obtenues aux exemples 11, 12 et 14 sont respectivement représentés par les courbes 41, 42 et 44 sur la figure 7. Le diffractogramme des rayons X de l'exemple 14 (courbe 44) est représenté sur la figure 7 à titre d'exemple comparatif.

On observe, sur la figure 7, que l'intensité des raies de diffraction de rayons X de l'exemple 12 est supérieure à celle des raies de diffraction de rayons X de l'exemple 14, ce qui reflète également une plus grande cristallinité.

Les exemples comparatifs 13 et 14 correspondent à des particules phyllosilicatées obtenues par un traitement hydrothermal en l'absence de micro-ondes, selon le protocole décrit par WO2013/004979.

Les diffractogrammes RX des compositions de particules phyllosilicatées obtenues aux exemples 10 à 14 présentent des raies de diffraction caractéristiques présentées dans le tableau 4 suivant :

| Exemples | | 10 | 11 | 12 | 13 | 14 |
|---|---|---|---|---|---|---|
| plan (001) | d (Å) | 9,84 | 9,90 | 9,90 | 9,45 | 9,59 |
| plan (002) | d (Å) | 4,87 | 4,87 | 4,88 | 4,73 | 4,76 |
| plan (020) | d (Å) | 4,55 | 4,54 | 4,54 | 4,55 | 4,51 |
| Plan (003) | d (Å) | 3,20 | 3,18 | 3,20 | 3,14 | 3,14 |
| plan (060) | d (Å) | 1,52 | 1,51 | 1,52 | 1,53 | 1,52 |

Les résultats des exemples 10 à 14 permettent de montrer qu'il est particulièrement avantageux de réaliser un court traitement hydrothermal sous irradiation de micro-ondes (quelques minutes seulement) avant un traitement hydrothermal (sans irradiation de micro-ondes) à une température supérieure ou égale à 300°C, de façon à obtenir des particules minérales phyllosilicatées présentant une meilleure cristallinité, notamment une cristallinité proche de celle de particules de talc naturel.

L'invention peut faire l'objet de très nombreuses variantes de réalisation. En particulier, il est possible de varier la durée et la température du traitement solvothermal sous irradiation de micro-ondes en fonction des propriétés cristallines souhaitées, notamment leur nombre de feuillets élémentaires, leur épaisseur et leur taille dans le plan (a,b).

## Revendications

1. Composition comprenant des particules synthétiques, dites particules phyllominérales, de formule chimique $(Si_xGe_{1-x})_4M_3O_{10}(OH)_2$, dans laquelle :

    - Si désigne le silicium,
    - Ge désigne le germanium,
    - x est un nombre réel de l'intervalle [0 ; 1], et

- M désigne au moins un métal divalent ayant pour formule $Mg_{y(1)}CO_{y(2)}$ $Zn_{y(3)}Cu_{y(4)}Mn_{y(5)}Fe_{y(6)}Ni_{y(7)}Cr_{y(8)}$ ; chaque *y(i)* représentant un nombre réel de l'intervalle [0 ; 1], et tel que $\sum_{i=1}^{8} y(i) = 1$, **caractérisée en ce que** lesdites particules phyllominérales présentent un nombre de feuillets élémentaires moyen inférieur ou égal à 3 et un diamètre moyen équivalent compris entre 100Å et 500Å.

**2.** Composition selon la revendication 1, **caractérisée en ce que** lesdites particules phyllominérales présentent un nombre de feuillets élémentaires moyen compris entre 2 et 3.

**3.** Composition selon l'une des revendications 1 ou 2, **caractérisée en ce que** lesdites particules phyllominérales sont formées d'un empilement de feuillets élémentaires de type phyllosilicate 2:1.

**4.** Composition selon l'une des revendications 1 à 3, **caractérisée en ce qu'**elle présente, en diffraction des rayons X, des raies de diffraction caractéristiques suivantes :

- un plan (001) situé à une distance comprise entre 10,60Å et 12,50Å ;
- un plan (020) situé à une distance comprise entre 4,40Å et 4,60Å ;
- un plan (060) situé à une distance comprise entre 1,51Å et 1,53Å.

**5.** Composition selon l'une des revendications 1 à 4, **caractérisée en ce que** lesdites particules phyllominérales présentent une épaisseur inférieure à 40Å.

**6.** Procédé de préparation d'une composition comprenant des particules phyllominérales, formées d'éléments chimiques, dits éléments chimiques constitutifs, lesdits éléments chimiques constitutifs comprenant au moins un élément chimique choisi dans le groupe formé du silicium et du germanium, et au moins un élément chimique choisi dans le groupe formé des métaux divalents et des métaux trivalents, dans lequel :

- on réalise un traitement solvothermal par chauffage d'un gel précurseur desdites particules phyllominérales dans un milieu liquide, sous irradiation de micro-ondes, ledit gel précurseur comprenant 4 atomes de silicium et/ou de germanium pour 3 atomes d'au moins un métal M, M désignant au moins un métal divalent ayant pour formule $Mg_{y(1)}Co_{y(2)}$ $Zn_{y(3)}Cu_{y(4)}Mn_{y(5)}Fe_{y(6)}Ni_{y(7)}Cr_{y(8)}$ dans laquelle chaque y(i) représente un nombre réel de l'intervalle [0 ; 1], et tel que $\sum_{i=1}^{8} y(i) = 1$,
- lesdites particules phyllominérales sont des particules synthétiques phyllosilicatées de formule chimique $(Si_xGe_{1-x})_4M_3O_{10}(OH)_2$, dans laquelle :

  - Si désigne le silicium,
  - Ge désigne le germanium,
  - x est un nombre réel de l'intervalle [0 ; 1], et
  - M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; chaque y(i) représentant un nombre réel de l'intervalle [0 ; 1], et tel que

$$\sum_{i=1}^{8} y(i) = 1.$$

**7.** Procédé selon la revendication 6, **caractérisé en ce qu'**on réalise ledit traitement solvothermal à une température comprise entre 100°C et 250°C.

**8.** Procédé selon l'une des revendications 6 ou 7, **caractérisé en ce qu'**on réalise ledit traitement solvothermal à une pression comprise entre 0,5MPa et 11MPa.

**9.** Procédé selon l'une des revendications 6 à 8, **caractérisé en ce qu'**on réalise ledit traitement solvothermal pendant une durée prédéterminée supérieure à 30 secondes.

**10.** Procédé selon l'une des revendications 6 à 9, **caractérisé en ce qu'**on réalise ledit traitement solvothermal pendant une durée prédéterminée comprise entre 30 secondes et 5 heures.

**11.** Procédé selon l'une des revendications 6 à 10, **caractérisé en ce qu'**on réalise ledit traitement solvothermal pendant une durée prédéterminée inférieure à 15 minutes.

**12.** Procédé selon l'une des revendications 6 à 11, **caractérisé en ce qu'**après ledit traitement solvothermal sous irradiation de micro-ondes, on réalise un traitement solvothermal sans irradiation de micro-ondes, à une température comprise entre 250°C et 400°C.

**Patentansprüche**

**1.** Verbindung, welche synthetische Partikel, sogenannte phyllomineralische Partikel, der chemischen Formel $(Si_xGe_{1-x})_4M_3O_{10}(OH)_2$ aufweist, wobei:

- Si das Silizium bezeichnet,
- Ge das Germanium bezeichnet,
- x eine reelle Zahl des Intervalls [0; 1] ist, und
- M mindestens ein zweiwertiges Metall bezeichnet, welches als Formel $Mg_{y(1)}Co_{y(2)}Zn_{y(3)}Cu_{y(4)}Mn_{y(5)}Fe_{y(6)}Ni_{y(7)}Cr_{y(8)}$ hat, wobei jedes *y(i)* eine reelle Zahl des Intervalls [0; 1] darstellt, und sodass $\sum_{i=1}^{8} y(i) = 1$, **dadurch gekennzeichnet, dass** die besagten phyllomineralischen Partikel eine mittlere Anzahl an Elementarschichten, die kleiner oder gleich 3 ist, und einen mittleren Äquivalentdurchmesser, der zwischen 100Ä und 500Ä liegt, aufweisen.

**2.** Verbindung gemäß Anspruch 1, **dadurch gekennzeichnet, dass** die besagten phyllomineralischen Partikel eine mittlere Anzahl an Elementarschichten aufweisen, die zwischen 2 und 3 liegt.

**3.** Verbindung gemäß einem der Ansprüche 1 oder 2, **dadurch gekennzeichnet, dass** die besagten phyllomineralischen Partikel aus einem Stapel an Elementarschichten des Phyllosilikat-Typs 2:1 gebildet sind.

**4.** Verbindung gemäß einem der Ansprüche 1 bis 3, **dadurch gekennzeichnet, dass** sie in Röntgenstrahlenbeugung folgende charakteristischen Beugungslinien aufweist:

- eine Ebene (001), die mit einem Abstand angeordnet ist, der zwischen 10,60Å und 12,50Å liegt,
- eine Ebene (020), die mit einem Abstand angeordnet ist, der zwischen 4,40Å und 4,60Å liegt,
- eine Ebene (060), die mit einem Abstand angeordnet ist, der zwischen 1,51Å und 1,53Å liegt.

**5.** Verbindung gemäß einem der Ansprüche 1 bis 4, **dadurch gekennzeichnet, dass** die phyllomineralischen Partikel eine Dicke aufweisen, die kleiner als 40Å ist.

**6.** Verfahren zur Herstellung einer Verbindung, welche phyllomineralische Partikel aufweist, die aus chemischen Elementen, sogenannten konstitutiven chemischen Elementen, gebildet sind, wobei die besagten konstitutiven chemischen Elemente mindestens ein chemisches Element, welches aus der Gruppe ausgewählt ist, die aus dem Silizium und aus dem Germanium gebildet ist, und mindestens ein chemisches Element, welches aus der Gruppe ausgewählt ist, die aus zweiwertigen Metallen und dreiwertigen Metallen gebildet ist, aufweisen, wobei:

- man eine Solvothermal-Behandlung realisiert mittels Erwärmens eines Präkursor-Gels aus den besagten phyllomineralischen Partikeln in einem flüssigen Milieu unter Mikrowellen-Bestrahlung, wobei das besagte Präkursor-Gel 4 Atome von Silizium und/oder von Germanium für 3 Atome von mindestens einem Metall M aufweist, wobei M mindestens ein zweiwertiges Metall bezeichnet, welches als Formel $Mg_{y(1)}Co_{y(2)}Zn_{y(3)}Cu_{y(4)}Mn_{y(5)}Fe_{y(6)}Ni_{y(7)}Cr_{y(8)}$ hat, wobei jedes *y(i)* eine reelle Zahl des Intervalls [0; 1] darstellt,

und sodass $\sum_{i=1}^{8} y(i) = 1$,

- die besagten phyllomineralischen Partikel synthetische Phyllosilikat-Partikel der chemischen Formel $(Si_xGe_{1-x})_4M_3O_{10}(OH)_2$ sind, wobei

  - Si das Silizium bezeichnet,
  - Ge das Germanium bezeichnet,
  - x eine reelle Zahl des Intervalls [0; 1] ist, und
  - M mindestens ein zweiwertiges Metall bezeichnet, welches als Formel $Mg_{y(1)}Co_{y(2)}Zn_{y(3)}Cu_{y(4)}Mn_{y(5)}Fe_{y(6)}Ni_{y(7)}Cr_{y(8)}$ hat, wobei jedes *y(i)* eine reelle Zahl des Intervalls [0; 1] darstellt, und sodass $\sum_{i=1}^{8} y(i) = 1$.

**7.** Verfahren gemäß Anspruch 6, **dadurch gekennzeichnet, dass** man die besagte Solvothermal-Behandlung bei einer Temperatur realisiert, die zwischen 100°C und 250°C liegt.

**8.** Verfahren gemäß einem der Ansprüche 6 oder 7, **dadurch gekennzeichnet, dass** man die besagte Solvothermal-Behandlung bei einem Druck realisiert, der zwischen 0,5MPa und 11 MPa liegt.

**9.** Verfahren gemäß einem der Ansprüche 6 bis 8, **dadurch gekennzeichnet, dass** man die besagte Solvothermal-Behandlung während einer vorbestimmten Dauer realisiert, die länger als 30 Sekunden ist.

**10.** Verfahren gemäß einem der Ansprüche 6 bis 9, **dadurch gekennzeichnet, dass** man die besagte Solvothermal-Behandlung während einer vorbestimmten Dauer realisiert, die zwischen 30 Sekunden und 5 Stunden liegt.

**11.** Verfahren gemäß einem der Ansprüche 6 bis 10, **dadurch gekennzeichnet, dass** man die besagte Solvothermal-Behandlung während einer vorbestimmten Dauer realisiert, die kürzer als 15 Minuten ist.

**12.** Verfahren gemäß einem der Ansprüche 6 bis 11, **dadurch gekennzeichnet, dass** man nach der besagten Solvothermal-Behandlung unter Mikrowellen-Bestrahlung eine Solvothermal-Behandlung ohne Mikrowellen-Bestrahlung bei einer Temperatur, die zwischen 250°C und 400°C liegt, realisiert.

## Claims

**1.** Composition comprising synthetic particles, termed phyllomineral particles, of chemical formula $(Si_xGe_{1-x})_4M_3O_{10}(OH)_2$ in which:

  - Si designates silicon,
  - Ge designates germanium,
  - x is a real number of interval [0; 1], and
  - M designates at least one bivalent metal having as formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of interval [0; 1] and such that

$$\sum_{i=1}^{8} y(i) = 1,$$

**characterised in that** said phyllomineral particles have an average number of elementary lamellae less than or equal to 3 and an equivalent average diameter between 100 Å and 500 Å.

**2.** Composition according to claim 1, **characterised in that** said phyllomineral particles have an average number of elementary lamellae between 2 and 3.

3. Composition according to one of the claims 1 or 2, **characterised in that** said phyllomineral particles are formed from a stack of elementary lamellae of the 2:1 phyllosilicate type.

4. Composition according to one of the claims 1 to 3, **characterised in that** it has, in X-ray diffraction, the following characteristic diffraction lines:

- a plane (001) situated at a distance between 10.60 Å and 12.50 Å;
- a plane (020) situated at a distance between 4.40 Å and 4.60 Å;
- a plane (060) situated at a distance between 1.51 Å and 1.53 Å.

5. Composition according to one of the claims 1 to 4, **characterised in that** said phyllomineral particles have a thickness less than 40 Å.

6. Method for preparing a composition comprising phyllomineral particles, formed from chemical elements, termed constituent chemical elements, said constituent chemical elements comprising at least one chemical element chosen from the group formed by silicon and by germanium, and at least one chemical element chosen from the group formed by bivalent metals and trivalent metals, in which:

- a solvothermal treatment is implemented by heating a precursor gel of said phyllomineral particles in a liquid medium, under microwave irradiation, said precursor gel comprising 4 atoms of silicon and/or of germanium for 3 atoms of at least one metal M, M designating at least one bivalent metal having as formula $Mg_{y(1)}Co_{y(2)}Zn_{y(3)}Cu_{y(4)}Mn_{y(5)}Fe_{y(6)}Ni_{y(7)}Cr_{y(8)}$, in which each *y(i)* represents a real number of interval [0; 1] and such that

$$\sum_{i=1}^{8} y(i) = 1$$

- said phyllomineral particles are synthetic phyllosilicate particles of chemical formula $(Si_xGe_{1-x})4M_3O_{10}(OH)_2$, in which:
- Si designates silicon,
- Ge designates germanium,
- x is a real number of interval [0; 1], and
- M designates at least one bivalent metal having as formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of interval [0; 1] and such that

$$\sum_{i=1}^{8} y(i) = 1.$$

7. Method according to claim 6, **characterised in that** said solvothermal treatment is implemented at a temperature between 100°C and 250°C.

8. Method according to one of the claims 6 or 7, **characterised in that** said solvothermal treatment is implemented at a pressure between 0.5 MPa and 11 MPa.

9. Method according to one of the claims 6 to 8, **characterised in that** said solvothermal process is implemented for a predetermined duration greater than 30 seconds.

10. Method according to one of the claims 6 to 9, **characterised in that** said solvothermal treatment is implemented for a predetermined duration between 30 seconds and 5 hours.

11. Method according to one of the claims 6 to 10, **characterised in that** said solvothermal treatment is implemented for a predetermined duration less than 15 minutes.

12. Method according to one of the claims 6 to 11, **characterised in that**, after said solvothermal treatment under

microwave irradiation, there is implemented a solvothermal treatment without microwave irradiation, at a temperature between 250°C and 400°C.

Fig 1

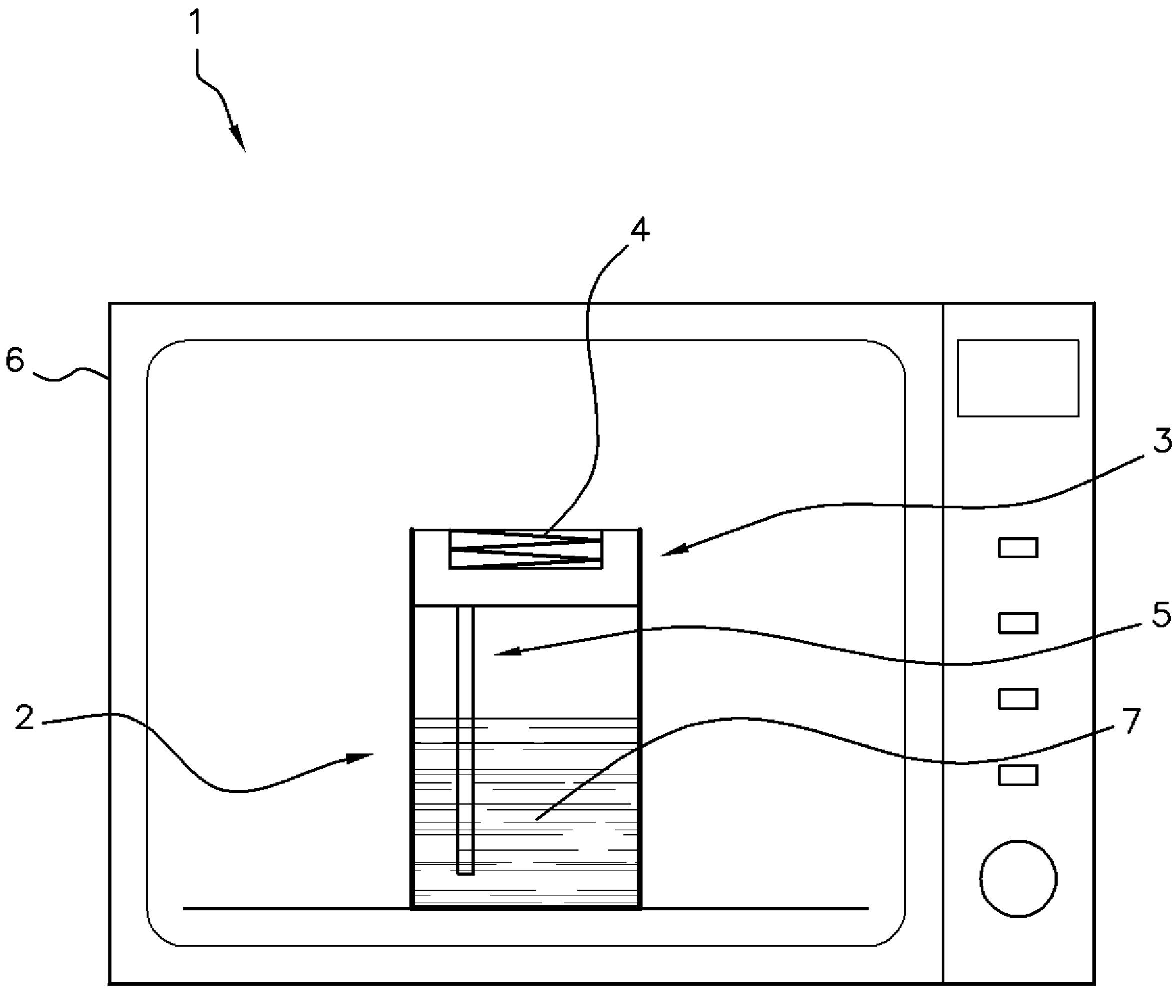

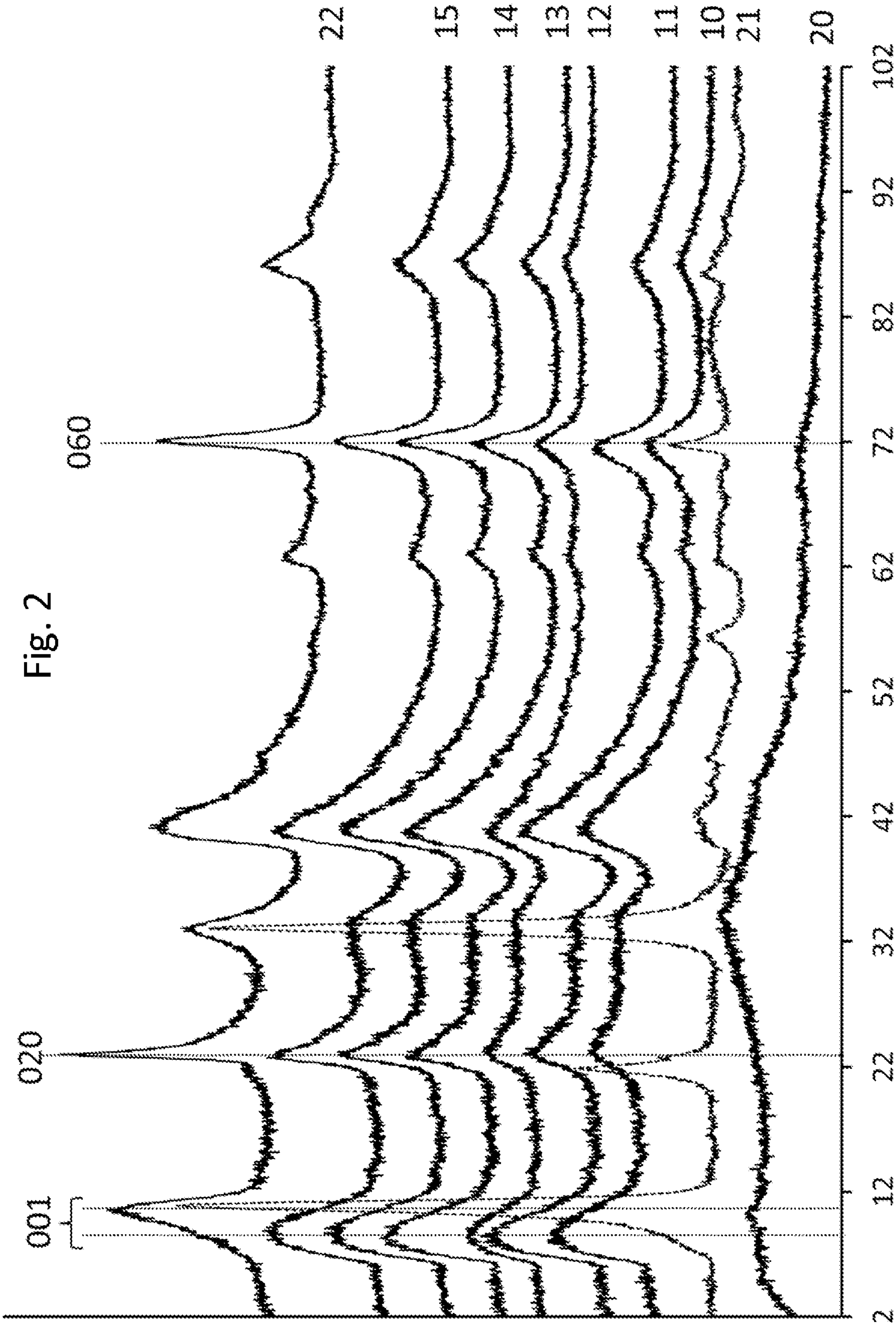


Fig. 2

Fig. 3

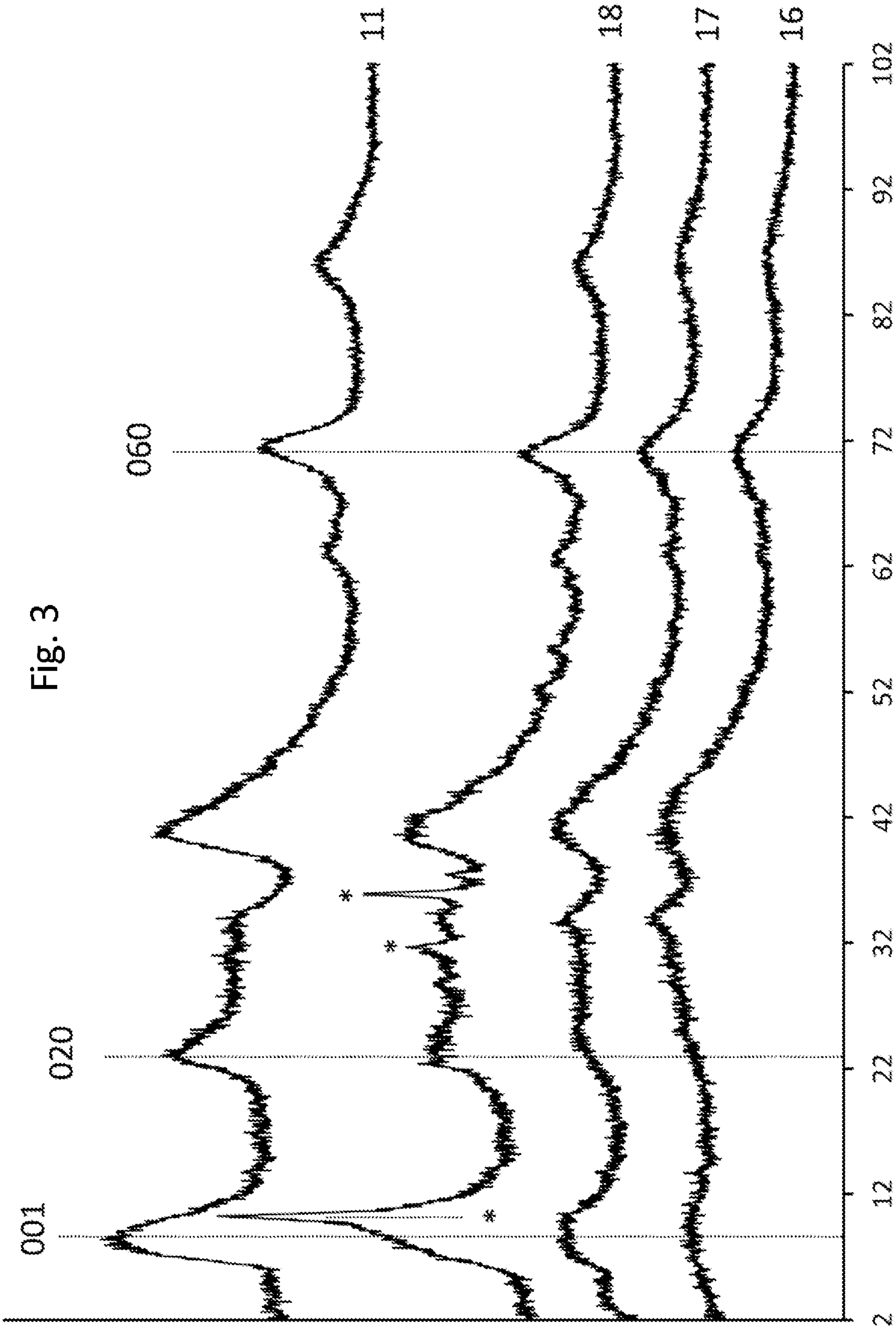

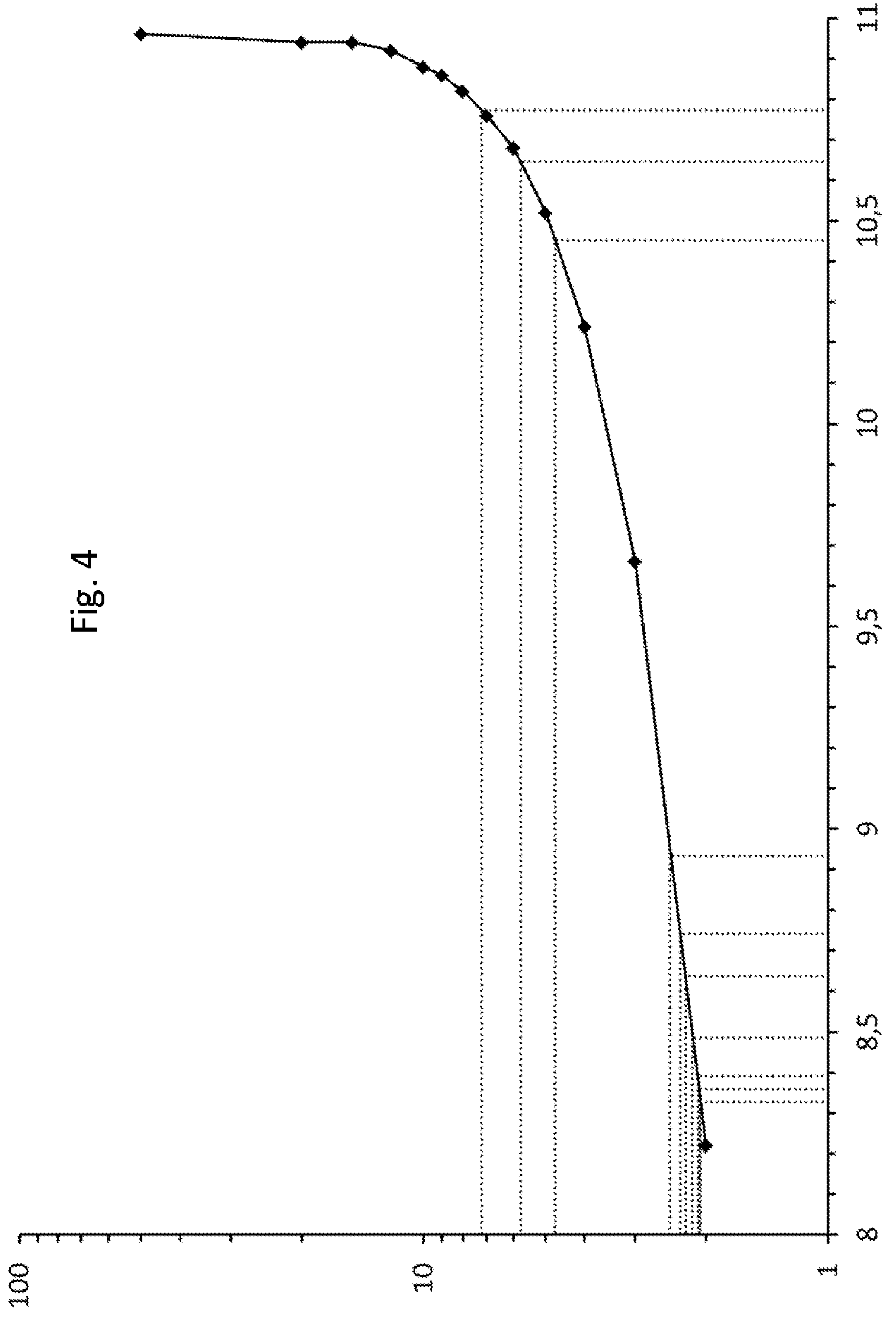


Fig. 4

Fig. 5

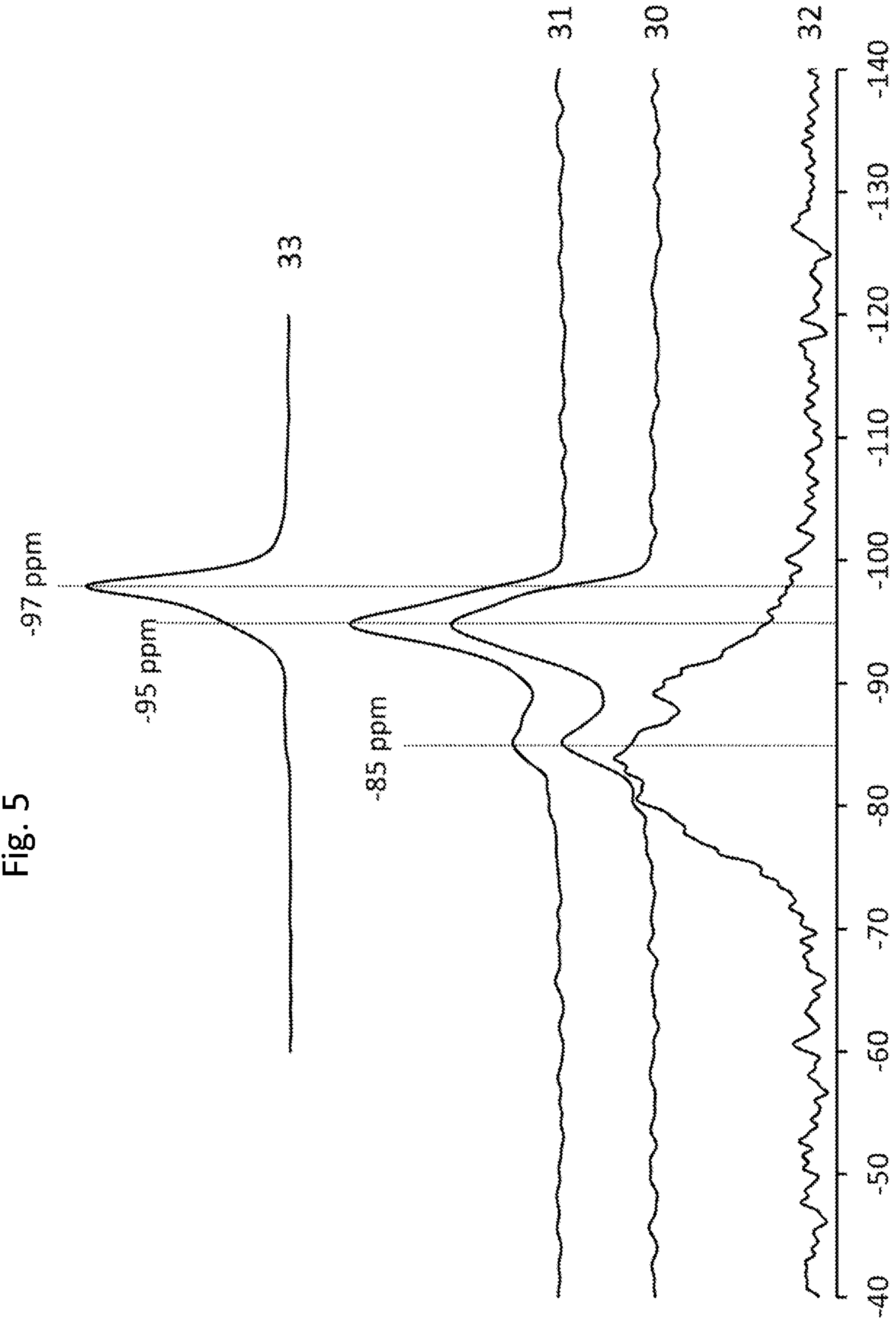

33
31
30
32
-97 ppm
-95 ppm
-85 ppm
-140
-130
-120
-110
-100
-90
-80
-70
-60
-50
-40

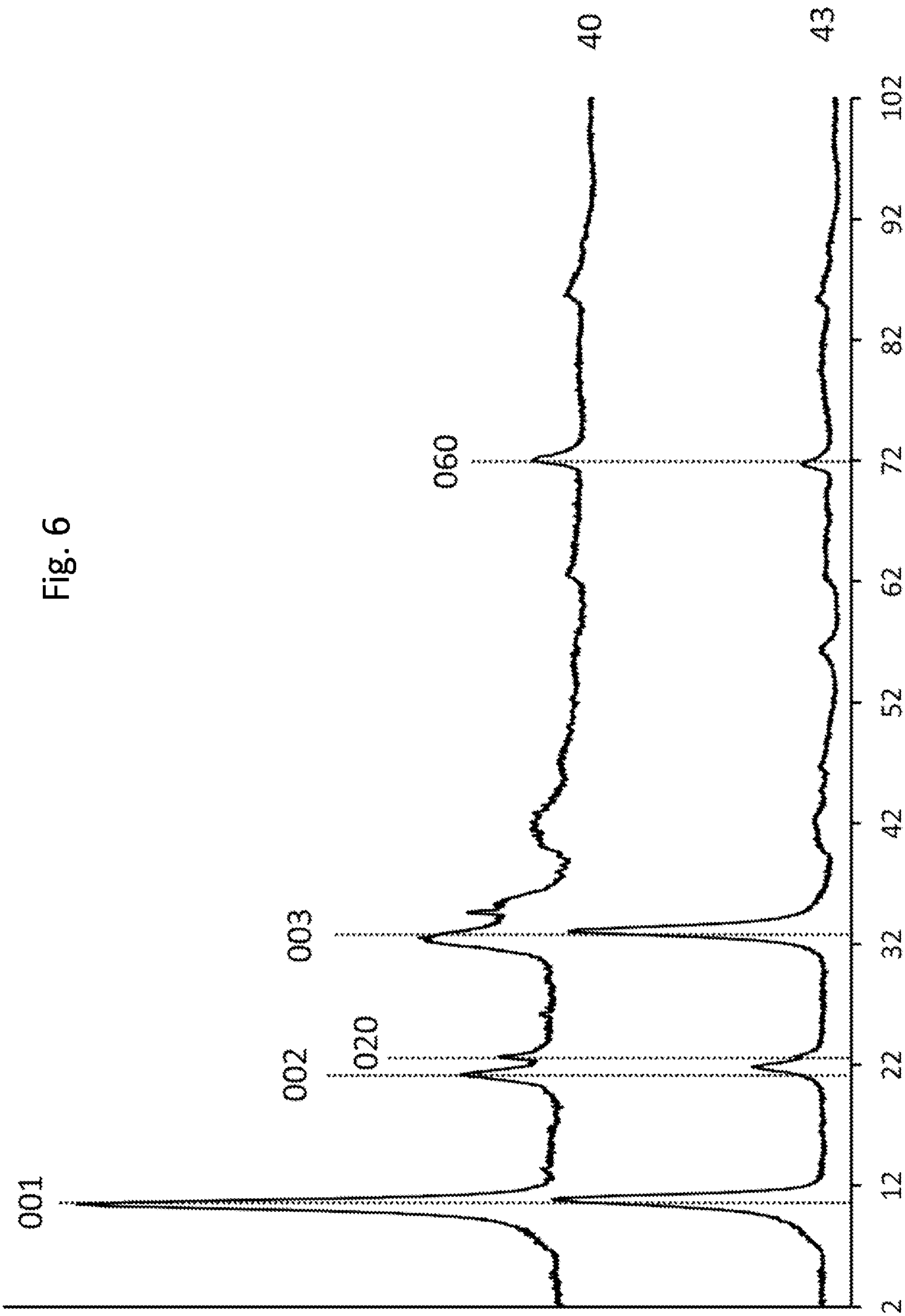


Fig. 6

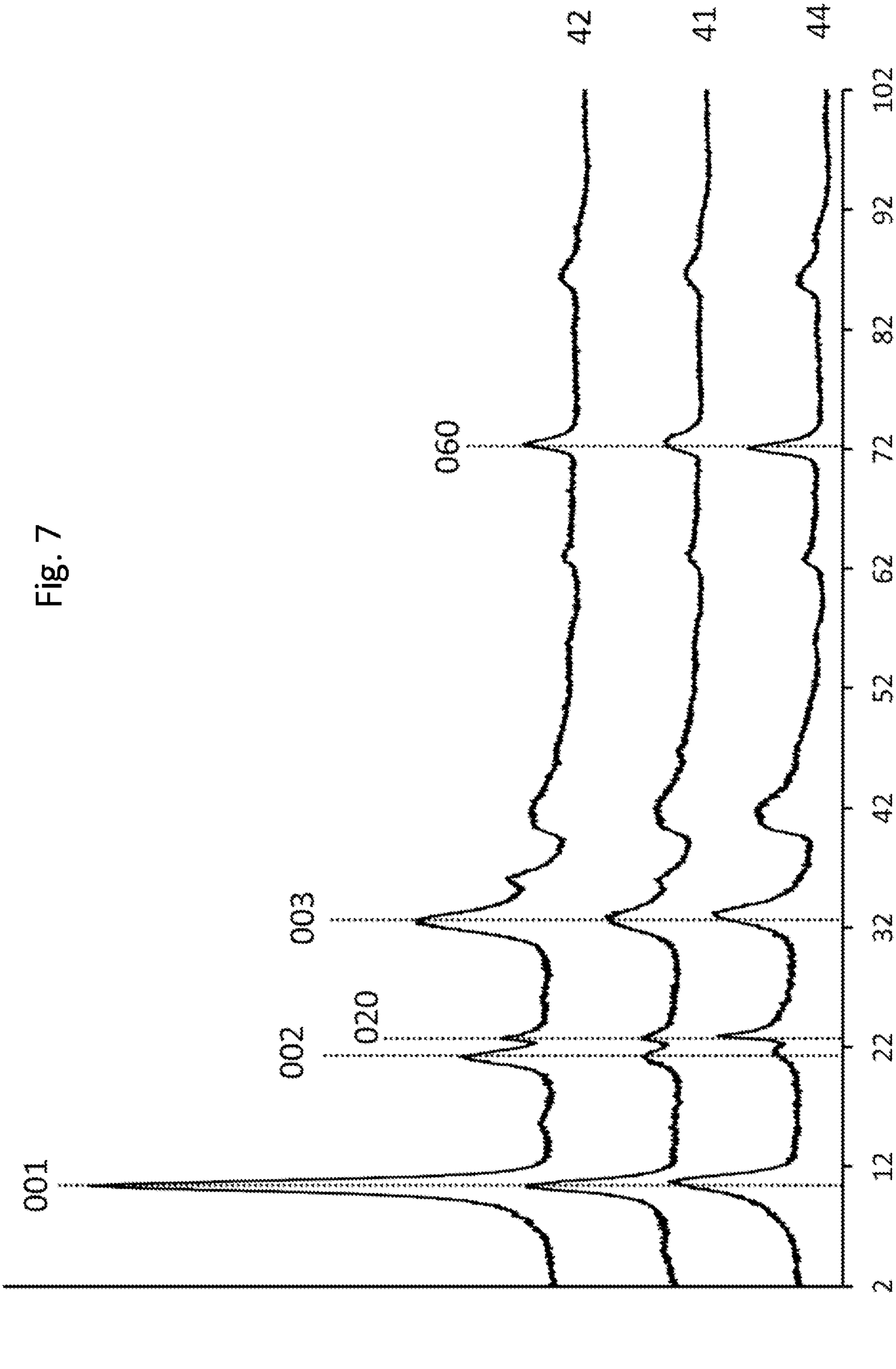


Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 306172 A
- WO 2008009799 A
- WO 2013004979 A


### Littérature non-brevet citée dans la description


- **SAKHAROV BA ; DRITS VA.** Mixed layered kaolinite-montmorrillonite : A comparison of observed and calculated diffraction pattern. *Clays and Clay Minerais,* 1973, vol. 21, 15-17
- **SAKHAROV BA ; NAUMOV AS ; DRITS VA.** Intensity of X-Rays scattered by layered structures with short-range factor S greater than 1, G greater than 1. Doklady Akademii Nauk, 1982, vol. 265, 871-874
- **SAKHAROV BA ; NAUMOV AS ; DRITS VA.** Diffraction of X-Rays by mixed-layered structures with random distribution of packing defects. Doklady Akademii Nauk SSSR, 1982, vol. 265, 339-343
- **ROSS M. ; SMITH W.L. ; ASHTON W.H.** *Triclinic talc and associated amphiboles from Gouverneur mining district, New York ; American Mineralogist,* 1968, vol. 53, 751-769